# EUROPEAN PATENT APPLICATION

(11) **EP 1 886 837 A1**
(43) Date of publication of application: **13.02.2008**
(21) Application number: 06715586.1
(22) Date of filing: 13.03.2006
(51) Int. Cl.: B44C 1/17, B32B 7/06, B32B 27/00, G03H 1/18

(54) **TRANSFER FOIL AND IMAGE FORMING MATTER EMPLOYING IT**

(30) Priority: 11.03.2005 JP 2005068302; 30.09.2005 JP 2005289270
(71) Applicant: Dai Nippon Printing Co., Ltd., Tokyo 162-8001 (JP)
(72) Inventor: TOMITA, Hirofumi, aga-cho 1-chome, Shinjuku-ku, Tokyo, 162 (JP); AOYAGI, Makoto, aga-cho 1-chome, Shinjuku-ku, Tokyo, 162 (JP)
(74) Representative: Müller-Boré & Partner Patentanwälte
(86) International application number: PCT/JP2006/304863
(87) International publication number: WO 2006/095902

(57) **Abstract**

This invention provides a transfer foil, which, even in a relief formation layer formed of a highly heat resistant material, can realize good embossing properties of a relief structure and good printing durability of a embossing stamper, and, even in transfer, for example, using a thermal printer, can realize good transferability of a high-definition image, and an image formed object using the transfer foil. The transfer foil comprises a base material, a peel layer, a relief formation layer, and a reflective layer formed in that order. The transfer foil is **characterized in that** the peel layer comprising at least a thermoplastic resin having a glass transition temperature of 120 to 200°C and the relief formation layer being formed of a cured product of an ionizing radiation curable resin.

## Description

### TECHNICAL FIELD

This invention provides a transfer foil. More particularly, the present invention relates to a transfer foil, which has a relief structure of a hologram and/or a diffraction grating, is not cracked or chipped and can realize transfer printing with high definition, for example, by a thermal printer, and an image formed object using the same.

The "ratio," "parts," "%" etc. as used herein in conjunction with formulation are by mass unless otherwise specified, and the mark "/" represents the state of being integrally laminated.
The term "ionizing radiation curable resin" as used herein refers to a precursor or composition before curing by ionizing radiation irradiation, and the product obtained by the ionizing radiation irradiation for curing is called an ionizing radiation cured resin.

### BACKGROUND ART

### (Main applications)

The transfer foil according to the present invention is used in the formation of an image formed object comprising a relief structure of, for example, a hologram and/or a diffraction grating which has been printed by transfer with high definition, for example, by a print-type or thermal printer. High-definition transfer printing refers to faithful reproduction of print type or print information with substantially no defects of cracking, chipping, and burring. Transfer printing is consequently character printing or graphic printing and is sometime referred to as character printing and/or graphic printing depending upon situation.
The image formed object using the transfer foil according to the present invention is mainly used without particular limitation in applications that require an image formed object formed by printing a relief structure of, for example, a hologram and/or a diffraction grating with high definition, and may be used in transfer, for example, onto cards such as credit cards, ID cards, and prepaid cards, and paper certificates, which cannot be reproduced by color copying, such as gift certificates, checks, drafts, stock certificates, tickets, and various certificates.
Transfer foils having a relief structure of, for example, a hologram and a diffraction grating can reproduce specific decorated images and three-dimensional images and thus can be utilized in packaging materials, books, pamphlets, POPs and the like. Further, these holograms and diffraction gratings require a high level of production techniques and cannot easily be produced and thus can be utilized for forgery preventive purposes.

### (Background Art)

Transfer printing using a transfer foil is known as means for transferring and bonding a relief structure of, for example, a hologram or a diffraction grating onto an article. The transfer foil comprises a base material, and a peel layer, a relief formation layer with a pattern of a hologram, a diffraction grating or the like formed therein, a reflective layer, and an adhesive layer stacked in that order on the base material. Hot stamping (also known as foil stamping) or thermal transfer by a heat roll is generally used for transfer printing of the transfer foil. In the thermal transfer, the transfer foil is placed between a heated metallic imprint or roll and an object, the transfer foil is pressed against the object by the imprint or roll, and the base material is then separated. In the hot stamping or transfer by a heat roll, however, the transfer of an image having dots of a very small area of several mm square or less, closely located dots and fine nontransfer parts (known as a void part in the art) is very difficult because burrs are very likely to occur. Thus, these methods are disadvantageously unsuitable for high-definition printing.
Further, in transfer printing by a thermal printer, cracking and the like occur during the transfer, that is, the transferability (printability) is poor. Accordingly, from the viewpoint of preventing cracking, the transfer foil is required to be resistant to heat as a material for a relief formation layer for relief formation. The heat resistant material, however, is poor in embossability in a production step of forming a relief and further disadvantageously causes poor printing durability of a press stamper for use in embossing. In particular, in functional relief structures of, for example, computer graphic holograms or computer generated holograms (CGHs), the embossability and printing durability are significantly deteriorated, and, thus, there is a possibility that the relief function cannot satisfactorily developed.
On the other hand, when a material having low heat resistance is used as a material for a relief formation layer, the printing durability is good, but on the other hand, the material is disadvantageous in that the relief embossability is poor, the relief is likely to be deteriorated, for example, by heat applied in the transfer printing, burrs are likely to occur, and the transferability is also poor.
Accordingly, there is a demand for transfer foils having a relief structure of, for example, a hologram and/or a diffraction grating, satisfying the requirements that, even in the case of a relief formation layer formed of a highly heat resistant material, the embossability for relief structure formation is good, good printing durability of an embossing stamper can be realized, highly efficient production can be realized, and, at the same time, even in the case of transfer by a thermal printer or the like, while maintaining design and/or optical functional effect of the hologram and diffraction grating and the like, high-definition images can be yielded by graphic printing and/or character printing at a high speed and low energy without no significant cracking, chipping and burring and with good transferability (printability) and high accuracy.

A transfer method is known in the art wherein transfer in a dot form is carried out using a thermal head in a thermal printer with a heat fusion-type or dye sublimation transfer-type ink ribbon (see, for example, patent document 1). This method, however, is disadvantageous in that, in the case of transfer foils having a relief structure of, for example, a hologram and/or a diffraction grating having a high level of design, cracking or chipping is likely to occur and, thus, a high-definition image cannot be faithfully transferred (printed) while, in the case where a material having somewhat low heat resistance is used in the relief formation layer, cracking or chipping does not occur, but on the other hand, the shape of the relief is changed (deteriorated), for example, by heat during transfer or the like and, thus, the level of design of the hologram and/or diffraction grating and the like is deteriorated.
The applicant of this invention has already filed patent applications regarding transfer foils which can realize high-definition printing with thermal printers (see, for example, patent documents 2 to 4). These transfer foils, however, are for faithful transfer (graphic printing) of high-definition images, and, thus, these applications do neither describe nor suggest simultaneous realization of the heat resistant material for the relief formation layer, and the embossability of the relief structure and the suitability for transfer, such as printing durability of the embossing stamper and prevention of cracking.

Patent document 1: Japanese Patent Laid-Open No. 227368/1999
Patent document 2: Japanese Patent Laid-Open No. 98455/2004
Patent document 3: Japanese Patent Laid-Open No. 101834/2004
Patent document 4: Japanese Patent Laid-Open No. 361622/2004

### DISCLOSURE OF THE INVENTION

### PROBLEMS TO BE SOLVED BY THE INVENTION

The present invention has been made with a view to solving the above problems of the prior art, and an object of the present invention is to provide a transfer foil, which, even in a relief formation layer formed of a highly heat resistant material, can realize good embossing properties of a relief structure and good printing durability of a embossing stamper, and, even in transfer, for example, using a thermal printer, can realize good transferability (printability) of a high-definition image, and an image formed object using the transfer foil.

### MEANS FOR SOLVING THE PROBLEMS

The above object can be attained by a transfer foil as defined in claim 1, that is, a transfer foil comprising a base material, a peel layer, a relief formation layer, and a reflective layer stacked in that order, characterized in that the peel layer comprises at least a thermoplastic resin having a glass transition temperature of 120 to 200°C and the relief formation layer is formed of a cured product of an ionizing radiation curable resin.
In the transfer foil as defined in claim 2, the thermoplastic resin is a cyclic olefin resin.
In the transfer foil as defined in claim 3, the cyclic olefin resin is a norbornene resin.
In the transfer foil as defined in claim 4, the relief formation layer is a cured product of an ionizing radiation curable resin containing a urethane (meth)acrylate oligomer.
In the transfer foil as defined in claim 5, the urethane (meth)acrylate oligomer is a product of a reaction of (1) an isocyanate compound having three or more isocyanate groups in its molecule, (2) a polyfunctional (meth)acrylate compound having at least one hydroxyl group and at least two (meth)acryloyloxy groups in its molecule, and (3) a polyhydric alcohol compound having at least two hydroxyl groups in its molecule.
In the transfer foil as defined in claim 6, wherein the ionizing radiation curable resin is a mixture of a urethane (meth)acrylate oligomer with a methacrylate resin.
In the transfer foil as defined in claim 7, wherein the content of the ionizing radiation curable resin on a mass basis is urethane (meth)acrylate oligomer : methacrylate resin = 1 : 2 to 2 : 1.
In the transfer foil as defined in claim 8, wherein the thickness of the peel layer, the thickness of the relief formation layer, and the thickness ratio of the peel layer to the relief formation layer are 0.1 to 1.0 µm, 0.3 to 2.5 µm, and 1 : 1 to 1 : 20, respectively.
In the transfer foil as defined in claim 9, wherein the base material has a thickness of 3.0 to 8.0 µm.
In the transfer foil as defined in claim 10, wherein a heat resistant protective layer is provided on the surface of the base material remote from the relief formation layer.
In the transfer foil as defined in claim 11, wherein an adhesive layer is provided on the surface of the reflective layer.
According to the present invention, as defined in claim 12, there is also provided an image formed object characterized by being produced by thermal transfer onto an object using a transfer foil according to any one of claims 1 to 9.
In the image formed object as defined in claim 13, the thermal transfer has been carried out by using a thermal printer.

### EFFECT OF THE INVENTION

The present inventors have aimed at simultaneous satisfaction of the embossability of a relief structure, the durability of an embossing stamper, and transferability (printability) even in the case of a relief formation layer formed of a highly heat resistant material. In the present invention, it has been found that the limitation of the material, thickness, and thickness ratio of each layer constituting the transfer foil can realize that (1) even in the case of a relief formation layer formed of a highly heat resistant material, (2) the embossability of the relief structure is good, the printing durability of the embossing stamper is good, and efficient production can be realized, and (3) in the case of transfer, for example, by a thermal printer, while maintaining the design and/or optical functional effect possessed by the hologram or diffraction grating and the like, transfer printing (character printing and/or graphic printing) can be carried out to form a high-definition image at high speed and low energy without significant cracking, chipping, and burring and with good transferability (printability).

The present invention as defined in claims 1 to 3 can provide a transfer foil that, even in the case of transfer, for example, by a thermal printer, while maintaining the design and/or optical functional effect possessed by the hologram or diffraction grating and the like, faithful character printing and/or graphic printing can be carried out to form a high-definition image at high speed and low energy without significant cracking, chipping, and burring and with good transferability (printability).
The invention as defined in claims 4 and 5 can provide a transfer foil that, in addition to the effect attained by the transfer foil as defined in claim 1, even in the case of a relief formation layer formed of a highly heat resistant material, can realize good embossability of a relief structure, good printing durability of an embossing stamper, and efficient production.
In the invention as defined in claims 6 and 7, the effect attained by the transfer foil according to claim 4 can be further enhanced.
The invention as defined in claims 8 and 9 can provide a transfer foil that, even in the case of a relief formation layer formed of a highly heat resistant material, the embossability of the relief structure is good, and the printing durability of the embossing stamper is good, and efficient production can be realized, and, further, in the case of transfer, for example, by a thermal printer, while maintaining the design and/or optical functional effect possessed by the hologram or diffraction grating and the like, faithful character printing and/or graphic printing can be carried out to form a high-definition image at high speed and low energy without significant cracking, chipping, and burring and with good transferability (printability).
The invention as defined in claim 10 can provide a transfer foil that, during transfer with a thermal printer, a transfer ribbon is not brought into intimate contact with a receiving roll in a print head, and stable printing operation can be realized.
The invention as defined in claim 11 provides a transfer foil that, even when an object is not provided with an adhesive layer, can realize successful transfer.
The invention as defined in claims 12 and 13 can provide an image formed object comprising a high-definition image, which formed even by transfer, for example, with a thermal printer, is substantially free from cracking, chipping, and burring while maintaining the design and/or optical functional effect possessed by the hologram or diffraction grating and the like.

### BRIEF DESCRIPTION OF THE DRAWINGS

[Fig. 1] Fig. 1 is a typical cross-sectional view of a transfer foil illustrating one embodiment of the present invention.
[Fig. 2] Fig. 2 is a typical cross-sectional view of a transfer foil illustrating one embodiment of the present invention.

### DESCRIPTION OF REFERENCE CHARACTERS

1: transfer foil
11: base material
13: peel layer
15: relief formation layer
17: reflective layer
19: adhesive layer
21: heat resistant protective layer

### BEST MODE FOR CARRYING OUT THE INVENTION

Embodiments of the present invention will be described in more detail with reference to the accompanying drawings.

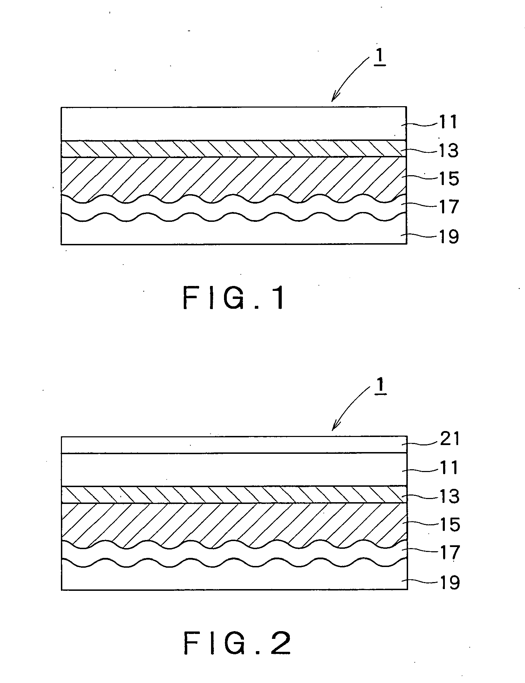

Fig. 1 is a typical cross-sectional view of a transfer foil illustrating one embodiment of the present invention.
Fig. 2 is a typical cross-sectional view of a transfer foil illustrating one embodiment of the present invention.

### (Construction of transfer foil)

As shown in Fig. 1, a transfer foil 1 according to the present invention comprises a base material 11, and a peel layer 13, a relief formation layer 15, a reflective layer 17, and an adhesive layer 19 provided on one side of the base material 11 and has a layer construction of base material 11/peel layer 13/relief formation layer 15/reflective layer 17/adhesive layer 19. The adhesive layer 19 may be provided on an object and thus is not indispensable. In general, however, the adhesive layer 19 is provided on the transfer foil. Accordingly, the following description on the transfer foil will be given about such a form that is provided with the adhesive layer 19. Further, as will be described later, as shown in Fig. 2, a heat resistant protective layer 21 may be provided on the other side of the base material 11.
The relief formation layer 15 is an ionizing radiation cured resin, preferably a cured product of an ionizing radiation curable resin containing a urethane (meth)acrylate oligomer. More preferably, the urethane (meth)acrylate oligomer is a product of a reaction of (1) an isocyanate compound having three or more isocyanate groups in its molecule, (2) a polyfunctional (meth)acrylate compound having at least one hydroxyl group and at least two (meth)acryloyloxy groups in its molecule, and (3) a polyhydric alcohol compound having at least two hydroxyl groups in its molecule.
The peel layer 13 is a cyclic olefin resin, preferably a norbornene resin.
The thickness of the peel layer 13, the thickness of the relief formation layer 15, and the thickness ratio of the peel layer 13 to the relief formation layer 15 are 0.1 to 1.0 µm, 0.3 to 2.5 µm, and 1 : 1 to 1 : 20, respectively.

### (Base material of transfer foil)

Regarding the base material 11, various materials may be applied depending upon applications so far as the materials have, for example, heat resistance high enough to withstand heat generated from a thermal head, mechanical strength, mechanical strength high enough to withstand the production steps, and solvent resistance. Examples of such materials include: polyester resins such as polyethylene terephthalate, polybutylene terephthalate, polyethylene naphthalate, polyethylene terephthalate-isophthalate copolymer, terephthalic acid-cyclohexanedimethanol-ethylene glycol copolymer, and polyethylene terephthalate/polyethylene naphthalate coextruded film; polyamide resins such as nylon 6, nylon 66, and nylon 610; polyolefin resins such as polyethylene, polypropylene, and polymethylpentene; vinyl resins such as polyvinyl chloride; acrylic resins such as polyacrylate, polymethacrylate, and polymethyl methacrylate; imide resins such as polyimide, polyamide-imide, and polyether-imide; engineering resins such as polyallylate, polysulfone, polyether sulfone, polyphenylene ether, polyphenylene sulfide (PPS), polyaramide, polyether ketone, polyether nitrile, polyether ether ketone, and polyether sulfide; styrene resins such as polycarbonate, polystyrene, high-impact polystyrene, AS resin, and ABS resin; and cellulose films such as cellophane, cellulose triacetate, cellulose diacetate, and nitrocellulose.

The base material may be a copolymer resin composed mainly of the above resins, a mixture (including an alloy) of the above resins, or a laminate comprising a plurality of layers of the above resins. The base material may be a stretched or nonstretched film. From the viewpoint of improving the strength, however, a uniaxially or diaxially stretched film is preferred. The base material is used in the form of a film, a sheet, or board formed of at least one layer of these resins. In general, polyester films such as films of polyethylene terephthalate or polyethylene naphthalate are preferred because of their excellent heat resistance and mechanical strength. Polyethylene terephthalate is best suited for the base material. The thickness of the base material is generally about 2.5 to 50 µm, preferably 2.5 to 12 µm. The thickness of the base material is most preferably 3 to 8 µm from the viewpoint of transferability. When the thickness of the base material is above the upper limit of the above-defined thickness range, the transfer of heat to the thermal head is poor. On the other hand, when the thickness of the base material is below the lower limit of the above-defined thickness range, the mechanical strength is unsatisfactory. In particular, when the base material is excessively thin, the heat generated from the thermal head is diffused and transferred to an adhesive layer in a nontransfer region around a predetermined image, disadvantageously resulting in activation of the adhesive layer. In this case, the adhesive layer is brought into a higher level of intimate contact with the object, and, consequently, the transferability is deteriorated. However, when the peel layer 13 is composed mainly of a cyclic polyolefin resin, the peel layer 13 is adhered with a suitable level of bonding strength to the base material 11 and the relief formation layer.

Prior to coating of a layer on the base material, the base material on its side to be coated may be subjected to treatment for easy adhesion, for example, corona discharge treatment, plasma treatment, ozone treatment, flame treatment, primer (also known as anchor coating, adhesion promoter, or easy adhesion agent) coating treatment, preheating treatment, dust removal treatment, vapor deposition treatment, or alkaline treatment. If necessary, the base material may contain additives such as fillers, plasticizers, coloring agents, and antistatic agents. Fillers usable herein include extender pigments such as silica and calcium carbonate. Disperse dyes are preferred as the coloring agent. Dispersed dyes usable herein include monoazo dyes, bisazo dyes, anthraquinone dyes, nitro dyes, styryl dyes, methine dyes, aroylene dyes, benzimidazole dyes, aminonaphthylamide dyes, naphthoquinone imide dyes, and coumarin derivative dyes. Antistatic agents include nonionic surfactants, anionic surfactants, and cationic surfactants, polyamides and acrylic acid derivatives.

### (Peel layer)

The peel layer 13 may be formed of a conventional thermoplastic resin having a glass transition temperature (Tg) of 120 to 200°C. Resins usable herein include cyclic olefin resins, norbornene resins, polycarbonate resins, polyarylate resins, polyamide-imide resins (Tg; 200°C or below), polyetherimide resins (Tg; 200°C or below), and polysulfone resins. Preferred are cyclic olefin resins. More preferred are norbornene resins. The material for the peel layer may also be a copolymer resin composed mainly of the above resins or a mixture (including an alloy) of the above resins. Cyclic olefin resins having a cyclic structure include, for example, (a) norbornene polymers, (b) monocyclic olefin polymers, (c) cyclic conjugated diene polymers, (d) vinyl alicyclic hydrocarbon polymers, and hydrides of the cyclic olefin resins (a) to (d). Among them, norbornene polymer hydrides, vinyl alicyclic hydrocarbon polymers, and their hydrides are preferred because of their excellent heat resistance, mechanical strength, and other properties, and norbornene polymer hydrides are more preferred.
In all cases, the glass transition temperature (Tg) described in the present invention is a glass transition point determined from a DSC curve based on JIS K 7121-1987.

Norbornene resins include, for example, (a-1) ring-opened polymers of norbornene monomers, (a-2) ring-opened copolymers of norbornene monomers with other monomers copolymerizable with the norbornene monomers, (a-3) addition polymers of norbornene monomers, (a-4) addition polymers of norbornene monomers and other monomers copolymerizable with the norbornene monomers, and hydrides of the resins (a-1) to (a-4).

Norbornene monomers include bicyclo[2.2.1]hept-2-ene (trival name: norbornene), tricyclo[4.3.0.12,5]deca-3,8-diene (trival name: dicyclopentadiene), 7,8-benzotricyclo[4.3.0.12,5]deca-3-ene (trival name: methanotetrahydrofluorene), tetracyclo[4.4.0.12,5.17,10]dodeca-3-ene (trival name: tetracyclododecene), and derivatives of these compounds (those having a substituent(s) in their ring). Substituents usable herein include alkyl groups, alkylene groups, alkoxycarbonyl groups, and carboxyl groups. A plurality of these substituents, which may be the same or different, may be attached to the ring. Norbornene monomers may be used either solely or in a combination of two or more.

Monomers copolymerizable with the norbornene monomer include monocyclic olefins, such as cyclohexene, cycloheptene, and cyclooctene, and their derivatives; cyclic conjugated dienes such as cyclohexadiene and cycloheptadiene, and their derivatives; and the like.
These cyclic olefins may be used either solely or in a combination of two or more.
Among these cyclic olefins, norbornene, tricyclo[4.3.0.12.5]-3-decene, tricyclo[4.4.0.12,5]-3-undecene, and tetracyclo[4.4.0.12.5.17.10]-3-dodecene are preferred.

The cyclic olefin resin may contain other thermoplastic resins and, if necessary, additives may be added such as fillers, plasticizers, lubricants, colorants, and antistatic agents from the viewpoint of regulating the adhesion of the peel layer to the base material.

The cyclic olefin resin used in the peel layer 13 is a norbornene resin or a resin composed mainly of a norbornene resin, for example, from the viewpoints of heat resistance, low birefringence, noncrystallinity, solvent solubility (coatability), and adhesion to the base material and the relief formation layer.
The thermoplastic resin used in the peel layer 13 has a proper glass transition temperature (Tg) which is 120°C to 220°C. When the Tg value is above 200°C, the resolution of the transferred image is not satisfactory. Further, when the Tg value is below 120°C, the heat resistance of the whole transfer layer is unsatisfactory. Consequently, for example, cracking occurs due to heat generated during transfer, and a high-definition hologram image formed object cannot be provided.

### (Relief formation layer)

Materials for constituting the relief formation layer 15 include, for example, cured products of ionizing radiation curable resins (ionizing radiation cured resins) such as epoxy-modified acrylate resins, urethane-modified acrylate resins, and acryl-modified polyesters. The ionizing radiation cured resin may be a copolymer resin composed mainly of these resins, or a mixture (including an alloy) of these resins. The ionizing radiation curable resin preferably has excellent embossability and a proper level of heat resistance.

The relief formation layer is formed of a cured product of an ionizing radiation curable resin containing a urethane (meth)acrylate oligomer. The urethane (meth)acrylate oligomer is preferably a product of a reaction of (1) an isocyanate compound having three or more isocyanate groups in its molecule, (2) a polyfunctional (meth)acrylate compound having at least one hydroxyl group and at least two (meth)acryloyloxy groups in its molecule, and (3) a polyhydric alcohol compound having at least two hydroxyl groups in its molecule.
More preferably, the isocyanate compound containing three or more isocyanate groups is at least one member selected from trimers of isophorone diisocyanate and a product of a reaction of isophorone diisocyanate with an active hydrogen-containing compound.

Regarding the reaction of an isocyanate compound, a polyfunctional (meth)acrylate compound, and a polyhydric alcohol compound, any of the following three methods may be used: (1) a method in which an isocyanate compound is first reacted with a polyhydric alcohol compound followed by a reaction with a hydroxyl-containing polyfunctional (meth)acrylate compound, (2) a method in which an isocyanate compound is first reacted with a hydroxyl-containing polyfunctional (meth)acrylate followed by a reaction with a polyhydric alcohol compound, and (3) a method in which a mixture of a polyhydric alcohol compound with a hydroxyl-containing polyfunctional (meth)acrylate compound is reacted with an isocyanate compound. When a reaction is allowed to proceed using two or more kinds of compounds in at least any one compound among isocyanate compounds, hydroxyl-containing polyfunctional (meth)acrylate compounds, and polyhydric alcohols, a mixture of two or more kinds of urethane (meth)acrylate oligomers is produced as the reaction product.

The total hydroxyl equivalent of the polyhydric alcohol compound and the hydroxyl-containing polyfunctional (meth)acrylate compound based on one equivalent of the isocyanate group in the isocyanate compound is preferably 0.9 to 1.8 equivalents. When the total hydroxyl group equivalent is less than 0.9 equivalent, the stability of the resin composition after the reaction is lowered while, when the total hydroxyl group equivalent is more than 1.8 equivalents, satisfactory cured product properties cannot be provided.
The molar ratio of the polyfunctional (meth)acrylate compound used is preferably 5 to 15 moles based on one mole of the polyhydric alcohol compound. When the molar ratio of the polyfunctional (meth)acrylate compound is below the lower limit of the above-defined molar ratio, satisfactory suitability for curing cannot be provided due to gelation. On the other hand, when the molar ratio of the polyfunctional (meth)acrylate compound is above the upper limit of the above-defined molar ratio, satisfactory cured product cannot be provided.

A mixture of the urethane (meth)acrylate oligomer with other resin may be used as the ionizing radiation curable resin, and a mixture of the urethane (meth)acrylate oligomer with a methacrylic resin is best suited. The mixture of the urethane (meth)acrylate oligomer with the methacrylic resin is preferably urethane (meth)acrylate oligomer : methacrylic resin = 1 : 2 to 2 : 1 on a mass basis. When the content of the urethane (meth)acrylate oligomer is above the upper limit of the above-defined content range, disadvantageously, satisfactory embossing cannot be provided. On the other hand, the content of the urethane (meth)acrylate oligomer is below the lower limit of the above-defined content range, disadvantageously, satisfactory heat resistance cannot be provided.

Preferably, the ionizing radiation curable resin is not tacky in a coated state before curing by ionizing radiation irradiation, and, after easy embossing of a relief structure, exposure to an ionizing radiation causes curing. The use of an ionizing radiation cured resin, which is a product (softening point: 40°C or above) of a reaction between an isocyanate compound having a melting point of 40°C or above and an (meth)acrylic compound containing an (meth)acryloyl group and reactive with an isocyanate group, is preferred. Regarding the heat resistance, the ionizing radiation cured resin constituting the relief formation layer 15 has a suitable glass transition temperature (Tg), preferably a glass transition temperature (Tg) of 120 to 300°C. When the ionizing radiation cured resin has an excessively high heat resistance exceeding the upper limit of the above-defined glass transition temperature range, the layer is hard and has lowered embossability. On the other hand, when the ionizing radiation cured resin has an excessively low heat resistance below the lower limit of the above-defined glass transition temperature range, the formed relief structure is deformed and deteriorated, for example, by heat in the transfer, resulting in deteriorated properties.

Further, in forming (replicating) a relief in the relief formation layer 15, a stamper (a metal plate or a resin plate) having a concave-convex relief on its surface is pressure bonded to the surface of the relief formation layer 15 to form (replicate) the concave-convex relief in the relief formation layer 15. In this case, a method may be adopted in which a release agent is previously incorporated in the relief formation layer 15 so that the stamper can easily be peeled off from the relief formation layer 15. Conventional release agents may be applied to the release agent, and examples thereof include solid waxes such as polyethylene wax, amide wax, and teflon (registered trademark) powder, fluoro, phosphoric ester or other surfactants, and silicones. Particularly preferred release agents include modified silicones. Specific examples thereof include modified silicone side chain type, modified silicone both end type, modified silicone one end type, modified silicone side chain both end type, trimethylsiloxysilicic acid-containing methylpolysiloxane (known as silicone resin), silicone grafted acrylate resins, and methylphenylsilicones.

Modified silicones are classified into reactive silicones and nonreactive silicones. Amino-modified, epoxy-modified, carboxyl-modified, carbinol-modified, methacryl-modified, mercapto-modified, phenol-modified, one terminal reactive, dissimilar functional group-modified or other modified reactive silicones are usable as reactive silicone oils. Polyether-modified, methylstyryl-modified, alkyl-modified, higher fatty ester-modified, hydrophilic group-modified, higher alkoxy-modified, higher fatty acid-modified, fluorine-modified or other modified silicones are usable as nonreactive silicone oils.
Preferably, the modified silicone does not inhibit the adhesion between the relief formation layer 15 with relief concaves and convexes formed thereon and the reflective layer 17 provided on the surface of the relief. Reactive silicones and silicone resins are preferred.

The amount of the release agent used is in the range of about 0.1 to 50 parts by mass, preferably in the range of about 0.5 to 10 parts by mass, based on 100 parts by mass of the ionizing radiation curable resin. When the amount of the release agent used is below the lower limit of the above-defined amount range, the separation of the press stamper from the ionizing radiation cured resin layer is unsatisfactory and, consequently, the prevention of the contamination of the press stamper is difficult. On the other hand, when the amount of the release agent used is above the upper limit of the above-defined amount range, cissing occurs upon coating of the composition, disadvantageously resulting in roughened coated film face, deteriorated adhesion between the coating film and the base material or the reflective layer or breaking (excessively lowered film strength) of the relief formation layer 15 film upon the transfer.

### (Ionizing radiation)

The ionizing radiation curable resin, when exposed to an ionizing radiation, after relief formation, for curing (reaction), is converted to an ionizing radiation cured resin (relief formation layer 15). Ionizing radiations usable herein include, for example, ultraviolet light (UV), visible light, γ-rays, X rays, or electron beams (EBs). Among them, ultraviolet light (UV) is suitable. In the case of ultraviolet light curing, a photopolymerization initiator and/or a photopolymerization accelerator are added to the ionizing radiation curable resin. On the other hand, in the case of curing with high-energy electron beams, there is no need to add the photopolymerization initiator and/or the photopolymerization accelerator. Further, when a proper catalyst is present, curing can be carried out even with heat energy.

### (Photopolymerization initiator)

Photopolymerization initiators usable herein include acetophenones, benzophenones, Michler's benzoyl benzoate, α-amyloxime ester, tetramethylthiuram monosulfide, and thioxanthones. If necessary, photosensitizers and photopolymerization accelerators are added. Photosensitizers and photopolymerization accelerators usable herein include conventional photosensitizers, and examples thereof include beonzoin compounds, for example, benzoin, benzoin methyl ether, benzoin ethyl ether, benzoin isopropyl ether, α-methylbenzoin, and α-phenylbenzoin; anthraquinone compounds, for example, anthraquinone and methyl anthraquinone; benzil; diacetyl; phenyl ketone compounds, for example, acetophenone and benzophenone; sulfide compounds, for example, diphenyl disulfide and tetramethylthiuram sulfide; α-chlormethyl naphthalene; anthracene; halogenated hydrocarbons, for example, hexachlorobutadiene and pentachlorobutadiene; n-butylamine; triethylamine; and tri-n-butylphosphine. The content of the photopolymerization initiator and photosensitizer is preferably about 0.5 to 10 parts by mass based on 100 parts by mass of the urethane-modified acrylic resin.

The incorporation of polymerization inhibitors, for example, phenols, for example, hydroquinone, t-butyl hydroquinone, catechol, and hydroquinone monomethyl ether; quinones, for example, benzoquinone and diphenyl benzoquinone; phenothiazine and the like; copper compounds and the like, in addition to each of the above components, in the ionizing radiation curable resin composition can improve the storage stability. Further, if necessary, various assistants, for example, accelerating agents, viscosity modifiers, surfactants, and antifoaming agents, may also be incorporated. Further, polymers such as styrene-butadiene rubbers may also be incorporated.

The relief formation layer 15 is an ionization radiation cured product produced by curing the ionizing radiation curable resin by ionizing radiation irradiation, and the thickness of the relief formation layer 15 is generally about 0.2 to 10.0 µm, preferably 0.3 to 2.5 µm.

### (Thickness and thickness ratio)

The transferability can be improved by regulating the thickness and thickness ratio of the peel layer 13 and the relief formation layer 15. That is, the peeling properties of the transfer layer including the peel layer and relief layer and the suitability for embossing of the transfer foil can be optimized by bringing the thickness of the peel layer 13, the thickness of the relief formation layer 15, and the thickness ratio of the peel layer 13 to the relief formation layer 15 respectively to 0.1 to 1.0 µm, 0.3 to 2.5 µm, and 1 : 1 to 1 : 20, and the transferability (printability) by a thermal printer or the like, embossability, and heat resistance can be improved.
When the thickness of the peel layer 13 is less than 0.1 µm, the transferability and embossability are deteriorated. On the other hand, when the thickness is larger than 1.0 µm, the transferability is deteriorated. When the thickness of the relief formation layer 15 is less than 0.3 µm, the embossability and heat resistance are deteriorated. On the other hand, when the thickness is larger than 2.5 µm, the transferability is deteriorated. When the thickness ratio of the peel layer 13 to the relief formation layer 15 is outside the range of 1 : 1 to 1 : 20 and the thickness of the peel layer 13 is smaller while the thickness of the relief formation layer 15 is larger, the adhesion of the transfer layer to the base material is so low that the embossability and transferability are deteriorated. On the other hand, when the thickness of the peel layer 13 is larger while the thickness of the relief formation layer 15 is smaller, the proportion of the relief formation layer in the transfer layer is relatively low and, consequently, the embossability is deteriorated.
When the transferability is low, the suitability for printing with a thermal printer or the like is possibly lowered. Further, when the heat resistance is low, for example, cracking after printing is likely to occur. In this case, there is a possibility that image quality after printing of a high-definition image having an accurate and complicated relief structure is deteriorated.
When the embossability is low, the relief structure cannot be satisfactorily formed by embossing, resulting in deteriorated optical function. In particular, for example, computer graphic holograms and computer generated holograms (CGHs) in which an optical function has been imparted to the relief structure, have an accurate and complicated structure, and, thus, a deterioration in embossability sometimes makes it difficult to satisfactorily form the relief by embossing.

### (Reflective layer)

The provision of a reflective layer 17 on a relief in the surface of the relief formation layer 15 provided with a relief structure such as a hologram or diffraction grating makes it possible to clearly view, for example, a reproduced image of the hologram and/or the diffraction grating. When the reflective layer 17 is formed of a light reflective metal, the reflective layer 17 is of opaque type, while, when the reflective layer 17 is formed of a transparent metal compound having a refractive index different from the refractive index of the surface of the relief formation layer 15, the reflective layer 17 is of transparent type. The reflective layer 17 may be formed of a single thin film or a combination of a plurality of thin films of metals and their oxides, sulfides, nitrides or the like of Cr (chromium), Ti (titanium), Fe (iron), Co (cobalt), Ni (nickel), Cu (copper), Ag (silver), Au (gold), Ge (germanium), Al (aluminum), Mg (magnesium), Sb (antimony), Pb (lead), Pd (palladium), Cd (cadmium), Bi (bismuth), Sn (tin), Se (selenium), In (indium), Ga (gallium), or Rb (rubidium). Preferred metals are aluminum, chromium, nickel, gold, and silver.

### (Transparent reflective layer)

The transparent reflective layer 17 is formed of a transparent metal compound having a refractive index different from the refractive index of the surface of the relief formation layer 15. When optical refractive index is different from that of the relief formation layer, the relief of a hologram and the like can be viewed despite the fact that the hue is substantially colorless and transparent and there is no metallic gloss. The larger the difference in refractive index between the reflective index 17 and the surface of the relief formation layer 15, the better the effect. The refractive index difference is not less than 0.3, preferably not less than 0.5, more preferably not less than 1.0. For example, ZnS, TiO₂, Al₂O₃, Sb₂O₃, SiO, TiO, SiO₂, and ITO can be applied. Preferred are ITO or tin oxide. For both the materials, the refractive index is 2.0 which has a satisfactory difference in refractive index from the surface of the relief formation layer. Materials having a low refractive index include LiF, MgF₂, and AlF₂. Satisfactory transmission of visible light suffices for transparency, and colorless or color transparent layers are included in the present invention.

The reflective layer of the metal or transparent metal compound may be formed in a thickness of about 10 to 2000 nm, preferably 20 to 500 nm, by a vacuum thin film method such as vacuum vapor deposition, sputtering, or ion plating. When the thickness of the reflective layer 17 is above the upper limit of the above-defined thickness range, cracking is likely to occur in the transfer. On the other hand, when the thickness of the reflective layer 17 is below the lower limit of the above-defined thickness range, the reflection effect is low.

### (Adhesive layer)

A thermobonding adhesive, which is heat melted or softened for bonding, can be applied in an adhesive layer 19, and examples thereof include ionomer resins, acid-modified polyolefin resins, ethylene-(meth)acrylic acid copolymers, ethylene-(meth)acrylic ester copolymers, polyester resins, polyamide resins, vinyl resins, acrylic, methacrylic or other (meth)acrylic resins, acrylic ester resins, maleic acid resins, butyral resins, alkyd resins, polyethylene oxide resins, phenolic resins, urea resins, melamine resins, melamine-alkyd resins, cellulose resins, polyurethane resins, polyvinyl ether resins, silicone resins, and gum resins. These resins may be used either solely or in a combination of two or more.

The resin for the adhesive layer 19 is preferably a vinyl resin, an acrylic resin, a butyral resin, or a polyester resin, for example, from the viewpoint of adhesive force. A maleic acid-vinyl chloride-vinyl acetate copolymer is more preferred from the viewpoint of adhesion.

The thickness of the adhesive layer 17 is generally about 0.05 to 5.0 µm, preferably 0.10 to 0.25 µm. When the thickness of the adhesive layer 19 is below the lower limit of the above-defined thickness range, the strength of bonding to an object is unsatisfactory, the adhesive layer is separated from the object. On the other hand, when the thickness of the adhesive layer 19 is above the upper limit of the above-defined thickness range, the adhesive effect is sufficient and saturated and thus is cost-ineffective. Further, in this case, the heat of the thermal head is wastefully consumed. If necessary, additives such as fillers, plasticizers, colorants, and antistatic agents may be added to the adhesive layer 19. Fillers usable herein include extender pigments such as silica and calcium carbonate. In particular, the addition of extender pigments can improve layer transferability. Antistatic agents include, for example, nonionic surfactants, anionic surfactants, cationic surfactants, polyamides and acrylic acid derivatives.

### (Heat-resistant protective layer)

Further, a heat-resistant protective layer 21 may be provided on the base material in its surface remote from the peel layer or relief formation layer. The heat-resistant protective layer 21 basically comprises a heat-resistant thermoplastic resin binder and a material which functions as a heat release agent or a lubricant. The heat-resistant thermoplastic resin binder can be selected from a wide range of materials, and suitable examples thereof include acrylic resins, polyester resins, styrene-maleic acid copolymers, polyimide resins, polyamide resins, polyamide-imide resins, cellulose acetate propionate, cellulose acetate butylate, acetylcellulose, vinylidene fluoride resins, nylons, polyvinylcarbazoles, chlorinated rubbers, cyclized rubbers, and polyvinyl alcohols. It is experientially known that, preferably, these resins have a glass transition point of 60°C or above, or are those produced by adding a compound containing two or more amino groups or a diisocyanate or a triisocyanate to an OH- or COOH-containing thermoplastic resin and causing crosslinking curing to some extent.

Heat release agents or lubricants to be incorporated in the thermoplastic resin are classified into those which act upon melting as a result of heating, for example, waxes such as polyethylene wax and paraffin wax, amides, esters or salts of higher fatty acids, higher alcohols and phosphoric esters such as lecithin, and those which as such act in a solid state, for example, fluororesins and inorganic material powders. These lubricants or heat release agents may be used in combination with any of other release agents, for example, fluorine-containing resin powders, guanamine resin powders, and wood flours. This combination can offer a further enhanced effect.

The composition for heat-resistant protective layer 21 formation is produced by incorporating 10 to 100 parts by mass of the above material, which functions as a lubricant or heat release agent, in 100 parts by mass of the thermoplastic resin binder. The composition may be applied onto the base material by kneading the composition with a proper solvent to prepare an ink, coating the ink onto the base material in its side remote from the relief formation layer, in the same manner as in the conventional coating method, for example, by a coating method such as roll coating, gravure coating, screen coating, or fountain coating, and drying the coating. The thickness of the heat-resistant protective layer 21 is about 0.01 to 1.0 µm, preferably 0.1 to 0.2 µm.

In order to reliably realize adhesion between the base material sheet and the heat-resistant protective layer 21, a primer layer may be previously provided on a base 11. The primer layer is selected according to the material for the base 11 and the type of the thermoplastic resin binder in the heat-resistant protective layer 21, and materials usable herein include acrylic resins, polyester resins, polyvinyl acetate resins, vinyl chloride-vinyl acetate copolymers, or a combined material of polyol/isocyanate, epoxy/isocyanate, or polyol/melamine. When the primer layer is formed, the thickness of the primer layer is preferably about 0.05 to 0.5 µm. When the thickness of the primer layer is below the lower limit of the above-defined thickness range, the adhesion is unsatisfactory. On the other hand, when the thickness of the primer layer is above the upper limit of the above-defined thickness range, unfavorable phenomena such as deteriorated sensitivity and heat resistance of the thermal head and a lowering in adhesion due to cohesive failure disadvantageously occur. The primer layer may be coated by the same manner as in the application of the composition for the heat-resistant protective layer 21, that is, by using a proper solvent to prepare an ink which is then coated by any desired method.

The transfer foil provided with a heat-resistant protective layer 21 is advantageous in that, due to widening of the range of applicable objects, or an increase in transfer (printing) speed, even when thermal printing by a thermal head from the surface of the heat-resistant protective layer 21 in the transfer foil is carried out under high energy necessary for realizing satisfactory transfer efficiency, heat fusion between the base and the thermal head, that is, the so-called sticking, does not occur.

### (Layer construction, material, thickness, and thickness ratio)

The transfer foil according to the present invention has a layer construction of heat resistant protective layer 21 (optional)/base material 11/peel layer 13/relief formation layer 15/reflective layer 17/adhesive layer 19 (optional). The thickness of each layer is preferably heat resistant protective layer 21 (0.1 to 0.2 µm)/base material 11 (3 to 8 µm)/peel layer 13 (0.1 to 1.0 µm)/relief formation layer 15 (0.3 to 2.5 µm)/reflective layer 17 (30 to 1000 nm)/adhesive layer 19 (0.15 to 0.25 µm), and the thickness ratio of the peel layer 13 to the relief formation layer 15 is 1 : 1 to 1 : 20. Thus, the layer construction, a combination of the relief formation layer 15, formed of an ionizing radiation cured resin, with a peel layer 13 composed mainly of a cyclic olefin resin, and, further, the limitation of the layer thickness and thickness ratio can realize good embossability of the relief structure, good printing durability of the embossing stamper, efficient production, and high-definition transfer with a thermal printer or the like even when the relief formation layer is formed of a highly heat resistant material.

Regarding the transferability by a thermal printer or the like, high-definition transfer can be realized by keeping the thickness of the peel layer and the relief formation layer in a given ratio. Further, the heat resistance of the relief formation layer 15 is so high that the transferred relief formation layer 15 is not cracked and, hence, the reflective layer 17 provided on the surface of the relief formation layer 15 is much less likely to be cracked and a high-definition image can be transferred. The thickness and thickness ratio will be described in more detail in the working example. Further, since the relief formation layer is formed of a highly heat resistant material, while maintaining design and/or optical function effect of holograms, diffraction gratings and the like, transfer printing (printing and/or photographic printing) of a high-definition image can be carried out at a high speed and low energy without cracking, with no significant dropouts or burring and with good transferability (printability).

### (Production process)

In the production process of a transfer foil according to the present invention, a conventional production process can be applied, comprising (a) providing a cyclic polyolefin resin-containing peel layer 13 on a base material 11, (b) providing a relief formation layer 15 on the surface of the peel layer 13, (c) embossing a relief in the relief formation layer 15, (d) applying an ionizing radiation to the relief formation layer 15, (e) providing a reflective layer 17 on the surface of the relief, and (f) providing an adhesive layer 19 on the surface of the reflective layer 17. Methods for forming the peel layer 13, the relief formation layer 15, the reflective layer 17, and the adhesive layer 19 are known to a person having ordinary skill in the art, and, thus, explanation thereof will be omitted and only (c) embossing of a relief in the relief formation layer 15 and (d) ionizing radiation irradiation will be described.

### (c: Step of embossing relief in the relief formation layer 15)

A relief is embossed on the surface of the relief formation layer 15 coated onto the base material. The relief has a concave-convex relief structure which is a surface concave-convex pattern capable of reproducing a two-dimensional and/or three-dimensional image, or an optical diffraction pattern having various optical functions. In the surface concave-convex relief structure, a hologram or diffraction grating on which a light intensity distribution of interference fringes formed by light interference of an object light and a reference light is recorded as a concave-convex pattern can be applied. Holograms include, for example, laser reproduction holograms such as fresnel holograms, fraunhofer holograms, lensless Fourier transformation holograms, and image holograms, and white light reproduction holograms such as rainbow holograms, and holograms utilizing their principles such as color holograms, computer holograms, hologram displays, multiplex holograms, holographic stereograms, holographic diffraction gratings, and computer graphic holograms in which a special optical function has been designed. Single or multiplex recording or a combination of these holograms and/or diffraction gratings is possible. A holographic diffraction grating utilizing hologram recording means may be mentioned as the diffraction grating. Another example of the diffraction grating is a diffraction grating in which any desired diffraction light can be obtained based on calculation by mechanically preparing a diffraction grating, for example, with an electron beam exposure system.

The computer graphic hologram in which a special optical function has been designed, has a complicated and high-definition relief structure and thus has a high possibility that a lowering in embossability makes it impossible to faithfully emboss a relief. Accordingly, faithful embossing is important. The computer graphic hologram and the computer generated hologram (CGH) are not particularly limited. However, examples thereof include relief structures such as Fourier transform holograms, holographic stereograms, three-dimensional holograms, and hologram optical elements.

The embossing is generally carried out by pressure bonding (the so-called "embossing") a stamper (a metal plate or a resin plate) with a relief formed thereon onto the surface of a relief formation layer 15, forming (replicating) the relief in the relief formation layer 15, and then separating the stamper. The stamper for replicating the relief may be a master per se. Since, however, there is a possibility of abrasion or damage, as with the case of an analog record or the like, for example, the following method is adopted. Specifically, a master is plated with a metal or coated with an ultraviolet curable resin. In the case of the ultraviolet curable resin coating, the coating is exposed to ultraviolet light to cure the coating. The plating or cured coating is then separated. Thus, replication by a metal or a resin is carried out. This method is known as 2P method in the art. The replicated form (stamper) is used for replication on a commercial scale.

Replication of the relief on a commercial scale is carried out by providing a metal form or resin form stamper, subjecting the surface of the relief formation layer 15 to embossing with the stamper to replicate a relief, and then applying an ionizing radiation, or applying an ionizing radiation during embossing and then separating the stamper to replicate the relief. In this replication on a commercial scale, continuous replication work can be realized by carrying out the replication in a continuous form.

In the present invention, as described above, the optimization of the material, thickness and thickness ratio of the peel layer 13 and the relief formation layer 15 can prevent contamination of the stamper even in emboss shaping of computer graphic holograms, computer generated holograms or the like, can realize good separation of the stamper from the relief formation layer 15, and can realize continuous use of the stamper for a long period of time (repeated embossing properties), contributing to printing durability.

### (d: Step of exposing the relief and peel layer to ionizing radiation)

An ionizing radiation is applied onto the surface of the relief formation layer 15 during or after embossing with a stamper or during and after the embossing to cure the ionizing radiation curable resin. In some cases, ionizing radiations are classified according to quantum energy possessed by electromagnetic waves. In the present specification, the ionizing radiation is defined as embracing all of ultraviolet light (UV-A, UV-B, and UV-C), visible light, γ-ray, X ray, and electron beams. Accordingly, for example, ultraviolet light (UV), visible light, γ-ray, X ray, and electron beams can be applied. However, ultraviolet light (UV) is suitable, because existing equipment is usable and the use of the ultraviolet light is a stable technique.

### (Printer)

Thermal printers (also known as a thermal transfer printer) in which the transfer foil according to the present invention may be preferably used will be described. In this connection, it is needless to say that the transfer foil according to the present invention can also be used in conventional hot stamping (foil stamping). In the transfer foil according to the present invention, conventional thermal printers for thermal transfer commonly used in the art are usable. In the thermal printer, a thermal print head (also known as a thermal head or a print head) is located to face a platen roller, and the transfer foil (also known as a holotransfer ribbon) according to the present invention and an object optionally provided with an image receiving layer are held between the thermal print head and the platen roller. The transfer foil and the object are pressed against the thermal head by a platen roller being rolled and are traveled by rotation. The transfer foil in its adhesive layer faces the object.

### (Thermal head)

A thermal head in its heat generating element according to an image generates heat for selective heating, and, consequently, relief formation layer 15/reflective layer 17/adhesion layer 19 is transferred onto the object, whereby a predetermined image is thermally transferred and recorded (graphic printed). Graphic printing methods are classified into a serial method and a line method. In the serial method, a thermal head is scanned in a direction normal to the scanning direction to conduct printing one line by one line. On the other hand, the line method is such that a line-type thermal head comprising a plurality of heat generating elements provided in line in a direction normal to the scanning direction is provided, the line-type thermal head is fixed along the direction of travel of the object, and, while conducting graphic printing (while allowing the hologram ribbon and the object to be traveled), heat is generated only in predetermined heat generating elements to print an image on the whole area in the widthwise direction. The predetermined image by the thermal transfer is not particularly limited, and examples thereof include characters or letters, numerals, images, illustrations, and photographs.

In the thermal head, for example, laser heat mode thermal heads, photo-thermal recording heads, and thermal heads can be applied. The thermal head is most commonly known as means in which heat is generated from heat generating elements in a dot form according to image signals to transfer a transfer layer in a hologram ribbon onto an object and thus to print an image. In the present invention, any thermal head may be used. Regarding the resolution, preferably, a high definition-type thermal head having a resolution of not less than 300 dpi is applied. The resolution is more preferably not less than 600 dpi.

### EXAMPLES

The following Examples and Reference Examples further illustrate the present invention. However, it should be noted that the present invention is not limited to these Examples and Reference Examples.

### <Preparation of urethane (meth)acrylate oligomer>

A urethane (meth)acrylate oligomer used in the composition for relief formation layer in the following Examples was prepared in under the following conditions.
206.0 g of ethyl acetate and 133.0 g of a trimer of isophorone diisocyanate (VESTANAT T 1890, manufactured by HULS, melting point 110°C) were placed in a reactor equipped with a stirrer, a reflux condenser, a dropping funnel, and a thermometer. The mixture was heated to 80°C to dissolve the above chemicals. Air is blown into the solution. Thereafter, 0.38 g of hydroquinone monomethyl ether, 249.0 g of pentaerythritol triacrylate (Viscoat 300, manufactured by Osaka Organic Chemical Industry Ltd.), and 0.38 g of dibutyltin dilaurate were added thereto, and the mixture was allowed to react at 80°C for 5 hr. 689.0 g of ethyl acetate was added to the reaction solution, and the mixture was cooled. Infrared absorption spectroscopic analysis showed that the absorption of isocyanate groups in the resultant reaction product solution disappeared. The solvent was removed from the reaction product solution. The residue had a softening temperature of 43°C.

### (Example 1)

| .<Composition for heat resistant protective layer> | |
|---|---|
| Silicone-modified acrylic resin (solid content 26%) | 10.0 parts |
| (Polyalloy NSA-X55 (tradename), manufactured by NATOCO CO., LTD.) | |
| Toluene/methyl ethyl ketone (mass ratio 1/1) | 40.0 parts |

| .<Composition for peel layer> | |
|---|---|
| Norbornene resin | 40.0 parts |
| (ARTON G (tradename), manufactured by JSR Corporation) (Tg; 171°C) | |
| Acrylic polyol resin | 10.0 parts |
| (Thermolac SU-100A (tradename), manufactured by Soken Chemical Engineering Co., Ltd.) | |
| Toluene/methyl ethyl ketone (mass ratio 7/3) | 50.0 parts |

| .<Composition for relief formation layer> | |
|---|---|
| Methacrylic resin | 50.0 parts |
| (PARAPET GF (tradename), manufactured by Kuraray Co., Ltd.) | |
| Urethane (meth)acrylate oligomer | 50.0 parts |
| (Urethane (meth)acrylate oligomer produced under the above-described conditions) | |
| Silicone | 1.0 part |
| (KF-860 (tradename), manufactured by The Shin-Etsu Chemical Co., Ltd.) | |
| Photopolymerization initiator | 5.0 parts |
| (Irgacure 907 (tradename), manufactured by Ciba Specialty Chemicals, K.K.) | |
| Methyl ethyl ketone | 100 parts |

A 6 µm-thick polyester terephthalate film (F-53 (tradename), manufactured by Toray Industries, Inc.) was provided as a base material. The composition for a heat resistant protective layer was gravure coated onto one side of the base material, and the coating was dried to form a 0.15 µm-thick heat resistant protective layer. The composition for a peel layer was roll coated onto the surface of the base material remote from the heat resistant protective layer to a thickness of 0.2 µm on a dry basis, and the coating was dried at 80°C to form a peel layer 13. The composition for a relief formation layer was coated by a gravure reverse coater onto the surface of the peel layer 13 at a film speed of 50 m/min to a thickness of 1.5 µm on a dry basis, and the coating was dried at 100°C to form a relief formation layer 15. The film thus obtained was not sticky at room temperature and can be stored and post-processed in a wound state. A stamper was pressed against the surface of the relief formation layer 15 (for embossing) to form a relief. Separately, a resin stamper replicated by a 2P process from CGH was applied to an emboss roller in a replicatig apparatus, and the assembly was heat pressed (embossed) at 150°C between opposed rollers to form a relief formed of a fine concave-convex pattern. Immediately after the embossing, the assembly was exposed to ultraviolet light emitted from a high-pressure mercury lamp for curing. An aluminum was vapor deposited onto the relief face by vacuum vapor deposition to a thickness of 40 nm to form a reflection-type relief hologram. An adhesive of a maleic acid-vinyl chloride-vinyl acetate copolymer was gravure coated onto the relief face, and the coating was dried at 100°C to form a 0.2 µm-thick adhesive layer. Thus, a transfer foil of Example 1 was produced.

### (Examples 2 to 6)

Transfer foils of Examples 2 to 6 were produced in the same manner as in Example 1, except that the layer thickness of the transfer foil was as shown in Table 1.

### (Example 7)

A transfer foil of Example 7 was produced in the same manner as in Example 1, except that the composition for a relief formation layer was as follows.

| .<Composition for relief formation layer> | |
|---|---|
| Methacrylic resin | 30.0 parts |
| (PARAPET GF (tradename), manufactured by Kuraray Co., Ltd.) | |
| Urethane (meth)acrylate oligomer | 60.0 parts |
| (Urethane (meth)acrylate oligomer prepared under the above-described conditions) | |
| Silicone | 1.0 part |
| (KF-860 (tradename), manufactured by The Shin-Etsu Chemical Co., Ltd.) | |
| Photopolymerization initiator | 5.0 parts |
| (Irgacure 907 (tradename), manufactured by Ciba Specialty Chemicals, K.K.) | |
| Methyl ethyl ketone | 100 parts |

### (Example 8)

A transfer foil of Example 8 was produced in the same manner as in Example 1, except that the composition for a relief formation layer was as follows.

| .<Composition for relief formation layer> | |
|---|---|
| Methacrylic resin | 60.0 parts |
| (PARAPET GF (tradename), manufactured by Kuraray Co., Ltd.) | |
| Urethane (meth)acrylate oligomer | 30.0 parts |
| (Urethane (meth)acrylate oligomer prepared under the above-described conditions) | |
| Silicone | 1.0 part |
| (KF-860 (tradename), manufactured by The Shin-Etsu Chemical Co., Ltd.) | |
| Photopolymerization initiator | 5.0 parts |
| (Irgacure 907 (tradename), manufactured by Ciba Specialty Chemicals, K.K.) | |
| Methyl ethyl ketone | 100 parts |

### (Example 9)

A transfer foil of Example 9 was produced in the same manner as in Example 1, except that the heat resistant protective layer was not provided.

### (Examples 10 to 15)

Transfer foils of Examples 10 to 15 were produced in the same manner as in Example 1, except that the thickness of the transfer foil was as shown in Table 2.

### (Example 16)

A transfer foil of Example 16 was produced in the same manner as in Example 1, except that the thickness of the base material was 2.5 µm.

### (Example 17)

A transfer foil of Example 17 was produced in the same manner as in Example 1, except that the thickness of the base material was 9.0 µm.

### (Example 18)

A transfer foil of Example 18 was produced in the same manner as in Example 1, except that the composition for a relief formation layer was as follows.

| .<Composition for relief formation layer> | |
|---|---|
| Methacrylic resin | 25.0 parts |
| (PARAPET GF (tradename), manufactured by Kuraray Co., Ltd.) | |
| Urethane (meth)acrylate oligomer | 75.0 parts |
| (Urethane (meth)acrylate oligomer prepared under the above-described conditions) | |
| Silicone | 1.0 part |
| (KF-860 (tradename), manufactured by The Shin-Etsu Chemical Co., Ltd.) | |
| Photopolymerization initiator | 5.0 parts |
| (Irgacure 907 (tradename), manufactured by Ciba Specialty Chemicals, K.K.) | |
| Methyl ethyl ketone | 100 parts |

### (Example 19)

A transfer foil of Example 19 was produced in the same manner as in Example 1, except that the composition for a relief formation layer was as follows.

| .<Composition for relief formation layer> | |
|---|---|
| Methacrylic resin | 75.0 parts |
| (PARAPET GF (tradename), manufactured by Kuraray Co., Ltd.) | |
| Urethane (meth)acrylate oligomer | 25.0 parts |
| (Urethane (meth)acrylate oligomer prepared under the above-described conditions) | |
| Silicone | 1.0 part |
| (KF-860 (tradename), manufactured by The Shin-Etsu Chemical Co., Ltd.) | |
| Photopolymerization initiator | 5.0 parts |
| (Irgacure 907 (tradename), manufactured by Ciba Specialty Chemicals, K.K.) | |
| Methyl ethyl ketone | 100 parts |

### (Comparative Example 1)

A transfer foil of Comparative Exampel 1 was produced in the same manner as in Example 1, except that the composition for a peel layer was as follows.

| <Composition for peel layer> | |
|---|---|
| Methyl methacrylate resin (Tg; 105°C) | 6.0 parts |
| (BR-80 (tradename), manufactured by Mitsubishi Rayon Co., Ltd.) | |
| Toluene/2-butanol (mass ratio 1/1) | 30.0 parts |

### (Comparative Example 2)

A transfer foil of Comparative Example 2 was produced in the same manner as in Example 1, except that the composition for a peel layer was as follows.

| <Composition for peel layer> | |
|---|---|
| Polyamide-imide resin (Tg; 250°C) | 19.0 parts |
| Dimetylacetimide | 45.0 parts |
| Toluene | 35.0 parts |

### (Comparative Example 3)

A transfer foil of Comparative Example 3 was produced in the same manner as in Example 1, except that the composition for a relief formation layer was as follows and the step of applying ultraviolet light emitted from a high-pressure mercury lamp for curing after the embossing was omitted.

| .<Composition for relief formation layer> | |
|---|---|
| Methacrylic resin | 100 parts |
| (PARAPET GF (tradename), manufactured by Kuraray Co., Ltd.) | |
| Silicone | 1.0 part |
| (KF-860 (tradename), manufactured by The Shin-Etsu Chemical Co., Ltd.) | |
| Methyl ethyl ketone | 100 parts |

**[Table 1]**

| Item | | Example | | | | | | | |
|---|---|---|---|---|---|---|---|---|---|
| | | 1 | 2 | 3 | 4 | 5 | 6 | 7 | 8 |
| Thickness | Base material | 6 | 6 | 6 | 6 | 3.0 | 8.0 | 6 | 6 |
| | Peel layer | 0.2 | 0.1 | 0.13 | 1.0 | 0.2 | 1.0 | 0.2 | 0.2 |
| | Relief forming layer | 1.5 | 0.3 | 2.5 | 1.0 | 1.5 | 2.5 | 1.5 | 1.5 |
| | Reflective layer | 40 | 25 | 40 | 40 | 40 | 100 | 40 | 40 |
| | Adhesive layer | 0.2 | 0.15 | 0.2 | 0.2 | 0.2 | 0.25 | 0.2 | 0.2 |
| Tg | Peel layer | 171 | 171 | 171 | 171 | 171 | 171 | 171 | 171 |
| Evaluation | Embossability | ⊚ | ⊚ | ⊚ | ⊚ | ⊚ | ⊚ | ⊚ | ⊚ |
| | Transferability | ⊚ | ⊚ | ⊚ | ⊚ | ⊚ | ⊚ | ⊚ | ⊚ |
| | Heat resistance | ⊚ | ⊚ | ⊚ | ⊚ | ⊚ | ⊚ | ⊚ | ⊚ |

| | | | | | | | | | |
|---|---|---|---|---|---|---|---|---|---|
| Note: The thickness is in nm for reflective layer and is in µm for the others, and Tg (glass transition temperature) is in °C. | | | | | | | | | |

**[Table 2]**

| Item | | Example | | | | | | |
|---|---|---|---|---|---|---|---|---|
| | | 9 | 10 | 11 | 12 | 13 | 14 | 15 |
| Thickness | Base material | 6 | 6 | 6 | 6 | 6 | 6 | 6 |
| | Peel layer | 0.2 | 0.5 | 0.5 | 0.05 | 1.2 | 0.1 | 1.0 |
| | Relief forming layer | 1.5 | 0.2 | 3.0 | 1.5 | 1.5 | 2.5 | 0.8 |
| | Reflective layer | 40 | 40 | 40 | 40 | 40 | 40 | 40 |
| | Adhesive layer | 0.2 | 0.2. | 0.2 | 0.2 | 0.2 | 0.2 | 0.2 |
| Tg | Peel layer | 171 | 171 | 171 | 171 | 171 | 171 | 171 |
| Evaluation | Embossability | ⊚ | ○ | ⊚ | ○ | ⊚ | ○ | ○ |
| | Transferability | ○ | ⊚ | ○ | ○ | ○ | ○ | ⊚ |
| | Heat resistance | ⊚ | ○ | ⊚ | ⊚ | ⊚ | ⊚ | ⊚ |

| | | | | | | | | |
|---|---|---|---|---|---|---|---|---|
| Note: The thickness is in nm for reflective layer and is in µm for the others, and Tg (glass transition temperature) is in °C. | | | | | | | | |

**[Table 3]**

| Item | | Example | | | | Comparative Example | | |
|---|---|---|---|---|---|---|---|---|
| | | 16 | 17 | 18 | 19 | 1 | 2 | 3 |
| Thickness | Base material | 2.5 | 9.0 | 6 | 6 | 6 | 6 | 6 |
| | Peel layer | 0.2 | 0.2 | 0.2 | 0.2 | 0.2 | 0.2 | 0.2 |
| | Relief forming layer | 1.5 | 1.5 | 1.5 | 1.5 | 1.5 | 1.5 | 1.5 |
| | Reflective layer | 40 | 40 | 40 | 40 | 40 | 40 | 40 |
| | Adhesive layer | 0.2 | 0.2 | 0.2 | 0.2 | 0.2 | 0.2 | 0.2 |
| Tg | Peel layer | 171 | 171 | 171 | 171 | 105 | 250 | 171 |
| Evaluation | Embossability | ○ | ○ | ○ | ⊚ | ⊚ | ○ | × |
| | Transferability . | ○ | ○ | ⊚ | ⊚ | ○ | × | × |
| | Heat resistance | ⊚ | ⊚ | ⊚ | ○ | × | ⊚ | × |

| | | | | | | | | |
|---|---|---|---|---|---|---|---|---|
| Note: The thickness is in nm for reflective layer and is in µm for the others, and Tg (glass transition temperature) is in °C. | | | | | | | | |

### (Evaluation and evaluation method)

The embossability was evaluated as follows. A resin stamper replicated by a 2P process applied onto an emboss roller in a replicating apparatus, and the assembly was travelled through between opposed rollers under conditions of roll temperature 150°C and speed 10 m/min. Immediately after the embossing, ultraviolet light emitted from a high-pressure mercury lamp was applied to cure the relief of a fine concave-convex pattern. The embossing was continuously carried out by 1000 m, and the emboss at the start point was compared with the emboss at the point of 1000 m. In this case, when the emboss at the start point was not different from the emboss at the point of 1000 m, the embossability was evaluated as "passed = ⊚"; when there was a slight difference between the emboss at the start point and the emboss at the point of 1000 m, the embossability was evaluated as "passed = ○"; and when there was a significant difference between the emboss at the start point and the emboss at the point of 1000 m, the embossability was evaluated as "failed = ×." Further, when the shape of the emboss roller could not be satisfactorily faithfully transferred under the above replication conditions, the embossibility was evaluated as "failed = ×."
For transferability evaluation, a thermal printer provided with a thermal head (300 dpi, 4500 Ω) was provided. A pattern comprising 0.5 mm-wide stripes arranged parallel to each other at intervals of 0.5 mm was transferred (printed) onto a vinyl chloride card, and the printed matter was evaluated by visual inspection. When there was no chipping in stripes and, at the same time, the void part between stripes is sharp, the transferabiliyt was evaluated as "passed = ⊚"; when there was slight chipping in stripes on such a level that does not substantially cause a practical problem and, at the same time, the void part between stripes is sharp, the transferability was evaluated as "passed = O"; and when there was chipping in stripes or when the void part between stripes was filled, the transferability was valuated as "failed = ×."
For heat resistance evaluation, the stripes were observed under an optical microscope at a magnification of 100 times in the transferability evaluation. When there was no cracking in the reflective layer, the heat resistance was evaluated as "passed = ⊚"; when there was slight cracking on such a level that does not substantially cause a practical problem, the heat resistance was evaluated as "passed = ○"; and when there was significant cracking, the heat resistance was evaluated as "failed = ×."

### (Results of evaluation)

The results of evaluation are shown in Tables 1, 2 and 3.
For Examples 1 to 8, all the embossability, transferability, and heat resistance were "passed = ⊚."
For Examples 9 to 19, any one of the evaluation items was evaluated as "passed = ○" with the other items being evaluated as "passed = ⊚," and there was no practical problem.
For Comparative Examples 1 to 3, at least any one of the evaluation items was failed.

## Claims

1. A transfer foil comprising a base material, a peel layer, a relief formation layer, and a reflective layer formed in this order, the peel layer comprising at least a thermoplastic resin having a glass transition temperature of 120 to 200°C, and the relief formation layer comprising a cured product of an ionizing radiation curable resin.

2. The transfer foil according to claim 1, wherein the thermoplastic resin is a cyclic olefin resin.

3. The transfer foil according to any one of claims 1 and 2, wherein the cyclic olefin resin is a norbornene resin.

4. The transfer foil according to any one of claims 1 to 3, wherein the relief formation layer is a cured product of an ionizing radiation curable resin containing a urethane (meth)acrylate oligomer.

5. The transfer foil according to any one of claims 1 to 4, wherein the urethane (meth)acrylate oligomer is a product of a reaction of (1) an isocyanate compound having three or more isocyanate groups in its molecule, (2) a polyfunctional (meth)acrylate compound having at least one hydroxyl group and at least two (meth)acryloyloxy groups in its molecule, and (3) a polyhydric alcohol compound having at least two hydroxyl groups in its molecule.

6. The transfer foil according to claim 4 or 5, wherein the ionizing radiation curable resin is a mixture of a urethane (meth) acrylate oligomer with a methacrylate resin.

7. The transfer foil according to claim 6, wherein the content of the ionizing radiation curable resin on a mass basis is urethane (meth)acrylate oligomer : methacrylate resin = 1 : 2 to 2 : 1.

8. The transfer foil according to any one of claims 1 to 7, wherein the thickness of the peel layer, the thickness of the relief layer, and the thickness ratio of the peel layer to the relief formation layer are 0.1 to 1.0 µm, 0.3 to 2.5 µm, and 1 : 1 to 1 : 20, respectively.

9. The transfer foil according to any one of claims 1 to 8, wherein the base material has a thickness of 3.0 to 8.0 µm.

10. The transfer foil according to any one of claims 1 to 9, wherein a heat resistant protective layer is provided on the surface of the base material remote from the relief formation layer.

11. The transfer foil according to any one of claims 1 to 10, wherein an adhesive layer is provided on the surface of the reflective layer.

12. An image formed object **characterized by** being produced by thermal transfer onto an object using a transfer foil according to any one of claims 1 to 11.

13. The image formed object according to claim 12, wherein the thermal transfer has been carried out by using a thermal printer.
